# FASCICULE DE BREVET EUROPEEN

(11) **EP 3 196 487 B1**
(45) Date de publication et mention de la délivrance du brevet: **01.01.2020**
(21) Numéro de dépôt: 17150222.2
(22) Date de dépôt: 04.01.2017
(51) Int. Cl.: F16C 3/06, F16C 33/10, F16C 33/12

(54) **VILEBREQUIN AVEC REVÊTEMENT OLÉOPHOBE**
KURBELWELLE MIT OLEOPHOBER BESCHICHTUNG
CRANKSHAFT WITH OIL-REPELLENT COATING

(30) Priorité: 25.01.2016 FR 1650569
(43) Date de publication de la demande: 26.07.2017
(73) Titulaire: Renault s.a.s, 92100 Boulogne-Billancourt (FR)
(72) Inventeur: AGNOLI, Fabrice, 78350 JOUY EN JOSAS (FR)

(56) Documents cités:
- DE-A1-102012 210 418
- DE-A1-102013 213 615

## Description

### Domaine technique de l'invention

La présente invention concerne un vilebrequin de moteur thermique.

La présente invention concerne particulièrement un vilebrequin comportant un revêtement oléophobe pour diminuer les frottements entre le vilebrequin et une nappe d'huile dans laquelle est plongé le vilebrequin.

La présente invention concerne également un moteur à combustion interne de véhicule automobile.

### Etat de la technique

Les moteurs à combustion interne ou thermiques de véhicules automobiles comportent un vilebrequin maintenu solidaire d'un carter du moteur par des paliers, lesdits paliers entourent une partie du vilebrequin sensiblement dans l'axe du vilebrequin et connue sous le nom de tourillon. Entre deux paliers se trouvent des bras ou manivelles dont une première extrémité est équipée de maneton excentré sur lequel est montée une bielle. Ledit vilebrequin est mis en mouvement en rotation autour de son axe longitudinal sensiblement parallèle à l'axe du moteur par lesdites bielles comportant une tête de bielle à une première extrémité basse et entourant le maneton, et une extrémité haute opposée solidaire d'un piston. Ledit piston est apte à coulisser dans un cylindre selon un mouvement de va-et-vient pour entrainer le vilebrequin en rotation autour de son axe longitudinal.

Les manivelles peuvent être munies de masses d'équilibrages appelées contre-poids. Ces masses permettent l'équilibrage dynamique du vilebrequin. Les contrepoids sont disposés dans le prolongement de la manivelle de façon diamétralement opposée à la première extrémité équipée de maneton. Les contrepoids génèrent donc un couple résistant pour réduire les vibrations dues au mouvement alternatif des pistons et à la dissymétrie éventuelle du système de manivelle.

Afin de réduire les masses du moteur et notamment les masses en mouvement dont celle des contrepoids, lesdits contrepoids sont disposés de manière générale à une distance importante de l'axe de rotation longitudinal et trempent dans la nappe d'huile contenue dans un carter d'huile agencé en dessous du vilebrequin.

D'une part, les mouvements de rotation du vilebrequin autour de son axe longitudinal entrainent alors une plongée des contrepoids dans la nappe d'huile dont la traversée entraine des frottements qui font partie des différents frottements du vilebrequin et du moteur thermique et contribuent à une augmentation de la consommation de carburant, ce qui est susceptible entre lesdits contrepoids et l'huile.

Il est connu pour diminuer les frottements d'un corps en mouvement dans une nappe de liquide de diminuer le coefficient de frottement de la surface de contact dudit corps, par exemple avec un état de surface présentant une rugosité très faible.

Il est aussi connu pour d'autres éléments du moteur d'utiliser un revêtement d'un revêtement destiné à réduire lesdits frottements.

La publication FR 2906564-A1 divulgue ainsi un accessoire d'un moteur qui est un filtre à huile comprenant des fibres traitées oléophobes.

La publication DE102012210418 divulgue un dispositif comprenant un arbre tournant maintenu dans une chambre, ledit dispositif présentant des surfaces nécessitant une lubrification et des zones ne nécessitant pas de dépôt d'huile par exemple la surface de l'arbre tournant ou la paroi de la chambre. Selon D1, les surfaces ne nécessitant pas de lubrification ou de dépôt d'huile sont recouvertes de matières oléophobes.

Aucun des documents ne divulgue un traitement d'une surface de contact pour diminuer les frottements de ladite surface dans un déplacement dans une nappe d'huile.

D'autre part, le vilebrequin comporte plusieurs parties qui doivent présenter une lubrification afin de réduire les frottements de contact entre deux pièces métalliques. Par exemple, la première extrémité de bielle entoure le maneton et les surfaces de contact entre la bielle et le maneton doivent être efficacement lubrifiées. Il en est de même pour les surfaces de contact des tourillons entourées par des paliers.

### Bref résumé de l'invention

Le but de l'invention est de réduire les frottements du vilebrequin et les cisaillements de la nappe d'huile dans les balayages des contrepoids dans ladite nappe à moindre coût.

Le but de l'invention est de remédier à ces problèmes et un des objets de l'invention est un vilebrequin comme décrit dans la revendication 1 jointe.

De manière avantageuse, une partie du contrepoids comporte une surface traitée avec une protection pour repousser les matières huileuses pour améliorer le contact dudit contrepoids en plongeant dans la nappe d'huile dans le bas moteur. Les frottements dudit contrepoids dans son déplacement dans la nappe d'huile déposée dans le bas moteur sont alors réduits.

Selon d'autres caractéristiques de l'invention :
- la couche de protection s'étend depuis une extrémité libre du bras de manivelle jusqu'à une zone entourant le maneton et le tourillon.

De manière avantageuse, la couche de protection s'étend depuis une extrémité libre du bras de manivelle qui plonge dans la nappe d'huile dans le bas moteur, jusqu'à une zone entourant le maneton ou le tourillon, qui présentent une surface apte à retenir de l'huile pour la lubrification des contacts avec une bielle ou des paliers.
- ladite couche de protection comprend un revêtement oléophobe.

De manière avantageuse, la couche de protection comprend un revêtement comme une peinture présentant un caractère très oléophobe pour diminuer le frottement généré par le cisaillement acier(ou fonte) du contrepoids dans la nappe d'huile moteur.
- la couche de protection comprend un revêtement de carbone amorphe.

De manière avantageuse, selon cet autre mode de réalisation, la couche de protection comporte un revêtement de carbone amorphe qui présente une caractéristique de faible coefficient de frottement.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :

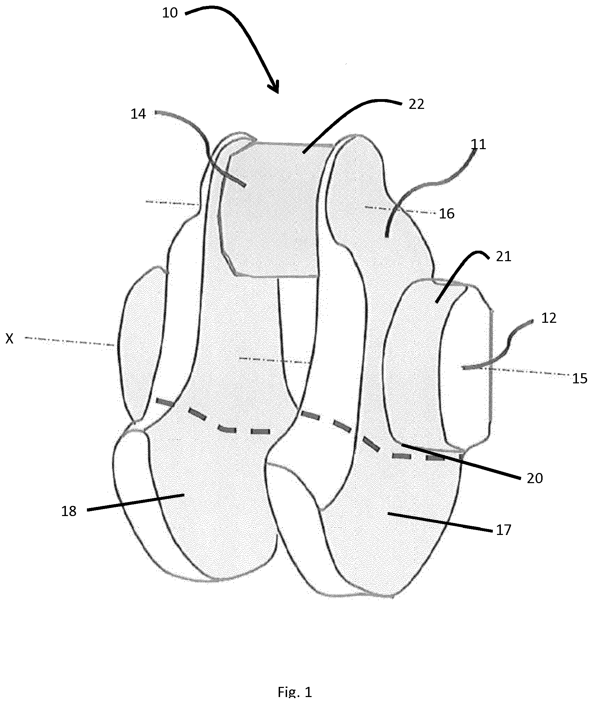

- La figure 1 représente un vilebrequin selon l'invention

### Description détaillée des figures

Dans la description qui va suivre, des chiffres de référence identiques désignent des pièces identiques ou ayant des fonctions similaires.

Selon la figure 1, un vilebrequin 10 de moteur à combustion interne de véhicule automobile comprend un bras de manivelle 11 agencé entre un tourillon 12 et un maneton 14. Le vilebrequin comprend généralement plusieurs tourillons alignés guidant l'axe central du vilebrequin en rotation par l'intermédiaire de paliers. Entre ces paliers se trouvent des bras de manivelle 11 qui tiennent des manetons excentrés sur lesquels sont montées des bielles (non représentées) dont l'extrémité opposé est connectée à un piston coulissant dans un mouvement de va-et-vient dans un cylindre. L'axe du tourillon 15 est confondu avec l'axe du vilebrequin X tandis que l'axe du maneton 16 est parallèle à l'axe du vilebrequin et excentré pour entrainer en rotation le vilebrequin.

Les bras de manivelle tiennent à une première extrémité un maneton et sont munis généralement de masses d'équilibrages appelées contrepoids 17 à l'extrémité opposée. Ces contrepoids permettent l'équilibrage dynamique du vilebrequin. Leur but est de réduire les vibrations dues au mouvement alternatif des pistons et à la dissymétrie éventuelle des bras de manivelle. L'équilibrage du vilebrequin est nécessaire pour réduire les vibrations du moteur causées par les forces et moments produits par la pression des gaz dans les cylindres et par les pièces en mouvement alternatif et de rotation, et pour diminuer les charges exercées sur les coussinets de la ligne d'arbre.

Les forces provoquées par les pièces en mouvement liées au vilebrequin génèrent des vibrations et II est cependant impossible d'obtenir un équilibrage parfait. Les contrepoids permettent alors de réduire voire annuler lesdites vibrations.

Le contrepoids est de forme sensiblement en quartier de cylindre présentant un rayon sensiblement important pour faciliter le balourd tout en minimisant la masse. Dans le mouvement de rotation du vilebrequin, le contrepoids est plongé dans une nappe d'huile disposée dans carter (non représenté) dans le bas moteur. Le balayage du contrepoids dans la nappe d'huile est gêné par des frottements de la masse d'acier du contrepoids dans le fluide, ce qui a pour conséquence de réduire le rendement du moteur.

Pour réduire lesdits frottements du contrepoids dans son déplacement dans la nappe d'huile et également le cisaillement de ladite nappe d'huile, il est connu de réduire les contacts entre ledit contrepoids et la nappe d'huile :
- en diminuant le rayon dudit contrepoids, ce qui entraine alors un déséquilibre du vilebrequin et génère un problème de bruit et de vibrations du groupe moto-propulseur pouvant affecter la qualité sonore audible dans le véhicule ou de NVH pour «Noise Vibration Harshness» en anglais, ou de fiabilité de coussinets de ligne.
- en abaissant le niveau maximum de la nappe d'huile, niveau qui répond à deux contraintes importantes de structure et de fonctionnement. En effet, de façon structurelle, il n'est pas possible d'abaisser le niveau maxi de la nappe d'huile car le fond du carter d'huile est bien déterminé en fonction de la hauteur entre le moteur et la chaussée ou le trottoir. De façon fonctionnelle, afin d'augmenter les intervalles de vidange, il convient de maintenir un volume d'huile suffisant.

On peut également améliorer l'état de surface du contrepoids par exemple par polissage, ce qui augmente sensiblement le coût de fabrication du vilebrequin.

Pour pallier les problèmes de frottements générés tout en respectant les contraintes de définition du vilebrequin et du moteur, l'invention propose un vilebrequin dont une partie du contrepoids susceptible de plonger dans la nappe d'huile dans le balayage dudit contrepoids dans ladite nappe d'huile comporte une surface de contact présentant un coefficient de frottement réduit notamment vis-à-vis de l'huile moteur.

Selon un mode de réalisation de l'invention, une partie 18 du contrepoids 17 comporte une couche de protection présentant un coefficient de frottement très faible pour réduire les frottements dans la nappe d'huile et les cisaillements de ladite nappe d'huile lors du passage du contrepoids dans ladite nappe.

Selon un mode de réalisation préféré, la surface de ladite partie 18 du contrepoids est revêtue d'une couche d'un produit fortement oléophobe qui présente les propriétés de repousser l'huile. Un exemple d'un produit peut être un produit impermébilisant de NeverWet®. Le produit peut être appliqué sur une partie du contrepoids depuis une extrémité libre jusqu'à une zone entourant le maneton ou le tourillon. De manière préférentielle, la partie recouverte par le produit oléophobe est délimitée par le point de contact 20 avec le tourillon tel que représenté en figure 1. En effet, les surfaces de contact 21, 22 des tourillons et manetons sont entourées respectivement par des paliers et des bielles et elles doivent être lubrifiées en permanence pour le bon fonctionnement du moteur. L'application du produit est faite par exemple par une pulvérisation sur ladite surface. Elle est précédée de manière préférentielle par une étape de masquage des surfaces de contact des tourillons et manetons. Ladite partie du contrepoids comporte alors une couche de revêtement susceptible de repousser les huiles afin de réduire les frottements du contrepoids dans son déplacement dans la nappe d'huile. De manière préférentielle, la surface de ladite partie de contrepoids ne nécessite pas de polissage préalable à la pulvérisation.

Selon un autre mode de réalisation, la partie du contrepoids susceptible de plonger dans la nappe d'huile comporte une couche de revêtement de carbone amorphe tel que le DLC ou «Diamond Like Carbon» en anglais. Ladite couche de revêtement permet de réduire de façon sensible le coefficient de frottement de la surface de ladite partie de contrepoids. L'application de ce revêtement est connue mais il convient dans une certaine mesure de protéger également les surfaces de contact 21, 22 des tourillons et manetons. De manière préférentielle, la surface de ladite partie de contrepoids ne nécessite pas de polissage préalable à la pulvérisation.

L'objectif est atteint : le vilebrequin comprend des contrepoids dont une partie susceptible de plonger dans la nappe d'huile comporte une couche de protection pour diminuer les frottements dudit contrepoids dans l'huile et les cisaillements de ladite nappe d'huile lors du balayage du contrepoids dans la nappe d'huile. L'application du revêtement est simple et peu couteux.

Comme il va de soi, l'invention ne se limite pas aux seules formes d'exécution de cette prise, décrites ci-dessus à titre d'exemples, elle en embrasse au contraire toutes les variantes. C'est ainsi notamment que la partie du contrepoids peut présenter un état de surface inférieur à Ra 0,2 obtenu par polissage, sans que l'on sorte pour autant du cadre de l'invention.

## Revendications

1. Vilebrequin (10) de moteur thermique de véhicule automobile monté mobile en rotation comportant au moins un tourillon (12) et un maneton (14) séparé par un bras (11) de manivelle, ledit bras de manivelle comportant à une extrémité un contrepoids (17) dont le volume peut être plongé dans une nappe d'huile,
**caractérisé en ce qu'**une partie (18) du contrepoids (17) comporte une couche de protection pour diminuer les frottements dans la nappe d'huile et les cisaillements de ladite nappe d'huile lors du passage du contrepoids dans ladite nappe.

2. Vilebrequin (10) selon la revendication 1, **caractérisé en ce que** la couche de protection s'étend depuis une extrémité libre du bras de manivelle jusqu'à une zone entourant le maneton (14) et le tourillon (12).

3. Vilebrequin (10) selon la revendication 1 ou 2, **caractérisée en ce que** ladite couche de protection comprend un revêtement oléophobe.

4. Vilebrequin (10) selon la revendication 1 ou 2, **caractérisé en ce que** la couche de protection comprend un revêtement de carbone amorphe.

## Patentansprüche

1. Kurbelwelle (10) eines Verbrennungsmotors eines Kraftfahrzeugs, die drehbeweglich gelagert ist, aufweisend mindestens einen Lagerzapfen (12) und einen Kurbelzapfen (14), die durch einen Kurbelarm (11) getrennt sind, wobei der Kurbelarm an einem Ende ein Gegengewicht (17) aufweist, dessen Volumen in eine Ölschicht getaucht sein kann, **dadurch gekennzeichnet, dass** ein Teil (18) des Gegengewichts (17) eine Schutzschicht aufweist, um die Reibungen in der Ölschicht und die Scherungen der Ölschicht beim Eintritt des Gegengewichts in die Schicht zu verringern.

2. Kurbelwelle (10) nach Anspruch 1, **dadurch gekennzeichnet, dass** sich die Schutzschicht von einem freien Ende des Kurbelarms bis zu einem Bereich erstreckt, der den Kurbelzapfen (14) und den Lagerzapfen (12) umgibt.

3. Kurbelwelle (10) nach Anspruch 1 oder 2, **dadurch gekennzeichnet, dass** die Schutzschicht eine oleophobe Beschichtung umfasst.

4. Kurbelwelle (10) nach Anspruch 1 oder 2, **dadurch gekennzeichnet, dass** die Schutzschicht eine Beschichtung aus amorphem Kohlenstoff umfasst.

## Claims

1. Crankshaft (10) for an internal combustion engine of a motor vehicle, mounted so as to be able to move in rotation, comprising at least one journal (12) and at least one crankpin (14) separated by a crank arm (11), said crank arm comprising at one end a counterweight (17) whose volume can be submerged in an oil bath,
**characterized in that** a part (18) of the counterweight (17) comprises a protective layer for reducing friction in the oil bath and shear of said oil bath as the counterweight passes through said bath.

2. Crankshaft (10) according to Claim 1, **characterized in that** the protective layer extends from a free end of the crank arm to a region surrounding the crankpin (14) and the journal (12).

3. Crankshaft (10) according to Claim 1 or 2, **characterized in that** said protective layer comprises an oil-repellent coating.

4. Crankshaft (10) according to Claim 1 or 2, **characterized in that** the protective layer comprises a coating of amorphous carbon.
